# EUROPÄISCHE PATENTSCHRIFT

(11) **EP 4 150 291 B1**
(45) Veröffentlichungstag und Bekanntmachung des Hinweises auf die Patenterteilung: **20.03.2024**
(21) Anmeldenummer: 21723671.0
(22) Anmeldetag: 29.04.2021
(51) Int. Cl.: G01B 5/00, G01M 17/007, B60B 30/02, G01B 5/255, B60C 25/05

(54) **RADHALTER**
WHEEL CLAMP
SUPPORT DE ROUE

(30) Priorität: 12.05.2020 DE 102020112816
(43) Veröffentlichungstag der Anmeldung: 22.03.2023
(73) Patentinhaber: Beissbarth Automotive Testing Solutions GmbH, 80993 München (DE)
(72) Erfinder: BUCHMEYER, Markus, 80636 München (DE); GANSER, Nicolai, 80809 München (DE)
(74) Vertreter: Schmitt-Nilson Schraud Waibel Wohlfrom Patentanwälte Partnerschaft mbB
(86) Internationale Anmeldenummer: PCT/EP2021/061240
(87) Internationale Veröffentlichungsnummer: WO 2021/228564

(56) Entgegenhaltungen:
- FR-A1- 3 016 691
- US-A- 978 976
- US-A1- 2014 115 906
- US-A1- 2019 310 066

## Beschreibung

Die Erfindung betrifft einen Radhalter, insbesondere einen Radhalter zur Fahrzeugvermessung. Die Erfindung betrifft auch ein Verfahren zum Montieren und ein Verfahren zum Demontieren eines solchen Radhalters an einem Rad eines Fahrzeugs, insbesondere eines Kraftfahrzeugs.

Zur Fahrzeugvermessung, insbesondere zur Fahrwerksvermessung, werden häufig Radhalter ("Radadapter"), die Sensoren und/oder Messmarken ("Targets") tragen können, an den Rädern des zu vermessenden Fahrzeugs montiert. Die Handhabung solcher Radhalter, insbesondere ihre Montage und Demontage an bzw. von den Rädern des Fahrzeugs, ist in der Regel aufwändig und schwierig. Insbesondere sind dabei mehrere Arbeitsschritte erforderlich, die mit zwei Händen durchgeführt werden müssen. Es besteht die Gefahr, dass die Messergebnisse der Fahrzeugvermessung, insbesondere der Fahrwerksvermessung durch eine fehlerhafte und/oder ungenaue Montage der Radhalter verfälscht werden.

FR 3 016 691 A1 offenbart eine Vorrichtung zum Messen des axialen und radialen Abstands zwischen der Außenfläche eines Rads und einem Kotflügel eines Kraftfahrzeugs. Die Vorrichtung umfasst eine Messhalterung und Mittel zum Anbringen der Vorrichtung an dem Rad. Die Halterung umfasst einen in radialer Richtung verschiebbaren Schieber und einen axialen Schieber, der den axialen Abstand messen kann. Die Befestigungsmittel umfassen ein Steuerelement, einen Entfaltungsmechanismus und mindestens drei Arme, die gegen das Rad positioniert werden können. Eine Betätigung des Steuerorgans aktiviert den Entfaltungsmechanismus. Dabei werden die Arme in eine Position ausgefahren, die an die Abmessungen des Rads angepasst ist, um die Vorrichtung an dem Rad zu befestigen.

Radhalter sind auch in den Dokumenten US 2019/310066 A1, US 2014/115906 A1 und US 978 976 A offenbart.

Es ist eine Aufgabe der Erfindung, die Montage und Demontage eines Radhalters an den Rädern eines Fahrzeugs zu vereinfachen und die Gefahr einer fehlerhaften und/oder ungenauen Montage zu reduzieren.

Diese Aufgabe wird durch den Radhalter ("Radadapter") des unabhängigen Patentanspruchs 1 und durch das Verfahren zum Montieren und Abmontieren eines Radhalters nach den Patentansprüchen 15 und 16 gelöst. Vorteilhafte Weiterbildungen ergeben sich aus den abhängigen Patentansprüchen.

Ein erfindungsgemäßer Radhalter ("Radadapter"), der zur klemmenden Befestigung an einem Rad, insbesondere an einem Rad eines Kraftfahrzeugs, und zur Befestigung eines Targets oder Sensors zur Fahrwerksvermessung vorgesehen und ausgebildet ist, hat einen Basiskörper mit einem zentralen Bereich und wenigstens zwei, insbesondere drei, Arme, die sich von dem zentralen Bereich des Basiskörpers in radialer Richtung nach außen erstrecken. Jeder der Arme umfasst ein bewegliches Element, das gegenüber dem zentralen Bereich des Basisköpers in radialer Richtung beweglich ist, um die Länge des Armes in radialer Richtung zu variieren; eine Druckfeder, die dazu an-geordnet und ausgebildet ist, das bewegliche Element in radialer Richtung nach außen zu drücken; und ein Zugelement, das mechanisch mit dem beweglichen Element gekoppelt und dazu angeordnet und ausgebildet ist, das bewegliche Element in radialer Richtung nach innen zu ziehen. Der Radhalter umfasst darüber hinaus ein Kopplungselement, das die Zugelemente der wenigstens zwei Arme mechanisch miteinander koppelt.

Die Druckfedern, die Zugelemente und das Kopplungselement bilden zusammen ein Synchronisationssystem, welches bewirkt, dass die Zugelemente nur synchron miteinander bewegbar sind und sich alle beweglichen äußeren Elemente unter Einfluss der Druckfedern synchron in radialer Richtung nach außen bewegen. Mit Hilfe der Zugelemente können die beweglichen äußeren Elemente in radialer Richtung nach innen gezogen werden. Da die Zugelemente durch das Kopplungselement miteinander gekoppelt sind, können die Zugelemente nur synchron miteinander bewegt werden, so dass die beweglichen äußeren Elemente durch die Zugelemente synchron miteinander nach innen bewegt werden.

Auf diese Weise ist es möglich, den Radhalter auf einfache und bequeme Weise auf ein Rad aufzubringen und an dem Rad zu befestigen.

In einer Ausführungsform weist jeder der Arme ein stationäres Element auf, das fest mit dem Basiskörper verbunden oder integral mit dem Basiskörper ausgebildet ist. Das bewegliche Element ist gegenüber dem stationären Element in radialer Richtung verschiebbar. Das bewegliche Element kann insbesondere als gegenüber dem stationären Element geführter oder wenigstens teilweise von dem stationären Element umschlossener Schlitten ausgebildet. Auf diese Weise wird ein stabiler und zuverlässiger Mechanismus bereitgestellt, der es ermöglicht, die Länge der Arme durch Verschieben der beweglichen Elemente gegenüber den stationären Elementen zu variieren.

In einer Ausführungsform weisen die beweglichen Elemente an ihren äußeren Enden jeweils eine Klaue oder Kralle auf, die dazu ausgebildet ist, an der Lauffläche des Rades anzuliegen. In einer Ausführungsform weisen die beweglichen Elemente auch Abstandshalter auf, die dazu vorgesehen sind, an einer Flanke des Rades anzuliegen. Mit Hilfe von Klauen bzw. Krallen und Abstandshaltern kann der Radhalter sicher in einer definierten Position und Ausrichtung an einem Rad montiert werden, so dass die Messungen mit hoher Genauigkeit durchgeführt werden können.

In einer Ausführungsform umfasst das Kopplungselement eine zentrale Seilrolle, die, insbesondere in einem zentralen Bereich des Basiskörpers, um eine zentrale Welle drehbar gelagert ist. Die Zugelemente sind in dieser Ausführungsform als Seilstränge ausgebildet, die mit einem ersten Ende an der zentralen Seilrolle und mit einem zweiten Ende an dem jeweiligen beweglichen Element befestigt sind. Die Seilstränge können durch Drehen der zentralen Seilrolle auf diese aufgewickelt und von dieser abgewickelt werden.

Auf diese Weise können die beweglichen Elemente durch Drehen der Seilrolle synchron in radialer Richtung nach innen und außen bewegt werden: Durch Aufwickeln der Seilstränge werden die beweglichen Elemente von den Seilsträngen synchron in radialer Richtung nach innen gezogen. Beim Abwickeln der Seilstränge werden die beweglichen Elemente von den Druckfedern synchron in radialer Richtung nach außen gedrückt.

In einer Ausführungsform ist das Kopplungselement mit einem elastischen Triebelement, insbesondere eine Spiralfeder, gekoppelt. Das Triebelement übt ein Drehmoment auf das Kopplungselement aus, welches das Kopplungselement so vorspannt, dass über die Zugelemente eine radial nach innen wirkende Zugkraft auf die beweglichen Elemente ausgeübt wird. Das Triebelement kann insbesondere an dem Basiskörper angebracht und über die zentrale Welle mit dem Kopplungselement verbunden sein.

In einer Ausführungsform sind die Druckfedern und das Triebelement so ausgebildet, dass die nach innen gerichteten Zugkräfte der Zugelemente größer als die radial nach außen gerichteten Druckkräfte der Druckfedern sind, so dass die resultierenden Kräfte die beweglichen Elemente in radialer Richtung nach innen zieht, wenn keine externen Kräfte auf die beweglichen Elemente ausgeübt werden. Der Radhalter ist so durch die resultierenden, nach innen gerichteten, Kräfte an einem Rad fixierbar.

In einer Ausführungsform erstrecken sich die wenigstens zwei Arme des Radhalters in einer gemeinsamen Ebene und die Welle des Kopplungselements ist orthogonal zu der gemeinsamen Ebene ausgerichtet. Dies ermöglicht eine platzsparende Anordnung der Komponenten des Synchronisationssystems.

In einer Ausführungsform ist die Druckfeder jedes Arms mit einem ersten, inneren Ende an dem Basiskörper, insbesondere an einer Abstützfläche des Basiskörpers, abgestützt und mit einem zweiten, äußeren Ende an dem beweglichen Element, insbesondere an einem in radialer Richtung inneren Ende des beweglichen Elements, abgestützt, so dass das bewegliche Element von der Kraft der Druckfeder in radialer Richtung nach außen gedrückt wird.

In einer Ausführungsform ist die Druckfeder jedes Arms wenigstens teilweise von einer Verkleidung, beispielsweise einer Hülle, umgeben. Durch eine Verkleidung wird die Druckfeder vor Verschmutzungen und äußeren mechanischen Einflüssen geschützt. Darüber hinaus wird das Verletzungsrisiko für einen Benutzer des Radhalters, insbesondere eine Klemmgefahr, durch eine Verkleidung reduziert.

In einer Ausführungsform verlaufen die Zugelemente / Seilstränge platzsparend durch Innen- bzw. Hohlräume in den Druckfedern.

In einer Ausführungsform weist der Radhalter zusätzlich einen Spannmechanismus auf, der dazu ausgebildet ist, eine zusätzliche in radialer Richtung nach innen wirkende Spannkraft auf die beweglichen Elemente aufzubringen, um den Radhalter noch fester und sicherer an einem Rad zu befestigen.

In einer Ausführungsform umfasst der Spannmechanismus ein mechanisch mit den beweglichen Elementen gekoppeltes, manuell betätigbares Betätigungselement, zum Beispiel einen Drehknauf oder einen Hebel. Durch Betätigens des Betätigungselements kann eine zusätzliche, in radialer Richtung nach innen wirkende Spannkraft auf die beweglichen Elemente aufgebracht werden.

In einer Ausführungsform ist das Betätigungselement mittels eines Kraftübertragungselements, beispielsweise mittels eines Riemens oder einer Kette, mit dem Kopplungselement, z.B. einer zentralen Seilrolle, wirkverbunden. Dadurch ist ein manuell auf das Betätigungselement aufgebrachtes Drehmoment über das Kraftübertragungselement an das Kopplungselement übertragbar, so dass es über die Zugelemente, insbesondere Seilstränge, eine zusätzliche in radialer Richtung nach innen wirkende Spannkraft auf die beweglichen Elemente ausübt.

In einer Ausführungsform ist das Betätigungselement in einem radialen Abstand von dem Kopplungselement bzw. der Seilrolle auf einer Vorderseite des Radhalters angeordnet, so dass er von einem Benutzer leicht betätigbar ist, wenn der Radhalter am Rad angebracht ist.

In einer Ausführungsform ist das Kraftübertragungselement auf einer Rückseite des Radhalters angeordnet, die dem Rad zugewandt ist, wenn der Radhalter an einem Rad montiert ist. In einer alternativen Ausführungsform ist das Kraftübertragungselement auf einer vom Rad abgewandten Vorderseite des Radhaltes angeordnet.

In einer Ausführungsform weist der Radhalter zusätzlich einen Arretierungsmechanismus auf, der dazu ausgebildet ist, die Bewegung der beweglichen Elemente in wenigstens einer Richtung zu blockieren. Der Arretierungsmechanismus ist insbesondere dazu ausgebildet, die Bewegung der beweglichen Elemente in einer ersten Richtung zu blockieren und in einer zweiten Richtung, die der ersten Richtung entgegengesetzt ist, freizugeben. Durch einen solchen Arretierungsmechanismus kann der Radhalter sicher an einem Rad fixiert werden, ohne dass dazu dauerhaft eine manuelle Kraft auf die beweglichen Elemente und/oder das Betätigungselement des Radhalters aufgebracht werden muss.

In einer Ausführungsform ist der Arretierungsmechanismus umschaltbar zwischen einem ersten Zustand, in dem er die Bewegung der beweglichen Elemente in einer ersten Richtung blockiert und in einer zweiten Richtung, die der ersten Richtung entgegengesetzt ist, freigibt, und einem zweiten Zustand, in dem er die Bewegung der beweglichen Elemente in der ersten Richtung freigibt und in der zweiten Richtung blockiert. Ein solcher umschaltbarer Arretierungsmechanismus ermöglicht es, die beweglichen Elemente nach dem Umschalten des Arretierungsmechanismus in radialer Richtung nach außen zu bewegen, so dass der Radhalter einfach und bequem vom Rad entfernt werden kann.

In einer Ausführungsform umfasst der Arretierungsmechanismus wenigstens ein Sperrklinken-Zahnrad und wenigstens ein zum Eingreifen in das Sperrklinken-Zahnrad ausgebildete Sperrelement. Die Zähne des wenigstens einen Sperrklinken-Zahnrads weisen jeweils eine steile und eine flache Flanke auf. Das Sperrelement ist so angeordnet, dass es in eine Sperrposition schwenkbar ist, in der eine Sperrklinke des Sperrelements zwischen einer steilen und einer flachen Flanke des Sperrklinken-Zahnrads eingreift, wobei es gegen die steile Flanke anschlägt und so eine Drehung des Sperrklinken-Zahnrads blockiert. Das wenigstens eine Sperrklinken-Zahnrad kann auf der Welle des Kopplungselements oder auf der Welle des Drehknaufs angeordnet sein. Durch die Kombination eines Sperrklinken-Zahnrads mit einem Sperrelement wird ein zuverlässiger Arretierungsmechanismus bereitgestellt.

In einer Ausführungsform umfasst der Arretierungsmechanismus zwei Sperrklinken-Zahnräder, die axial übereinander auf einer gemeinsamen Welle, insbesondere der Welle des Kopplungselements oder des Betätigungselements, angeordnet sind. Die steilen und flachen Flanken der Zähne der beiden Sperrklinken-Zahnräder sind in entgegengesetzten Richtungen ausgerichtet.

Das Sperrelement ist durch einen Umschaltmechanismus zwischen mindestens zwei Positionen schwenkbar: einer ersten Position, in der eine Sperrklinke des Sperrelements zwischen einer steilen und einer flachen Flanke der Zähne des ersten Sperrklinken-Zahnrads eingreift, wobei es gegen die steile Flanke anschlägt und eine Drehung des ersten Sperrklinken-Zahnrads in eine erste Drehrichtung blockiert, und einer zweiten Position, in der eine Sperrklinke des Sperrelements zwischen einer steilen und einer flachen Flanke der Zähne des zweiten Sperrklinken-Zahnrads eingreift, wobei es gegen die steile Flanke anschlägt und eine Drehung des ersten Sperrklinken-Zahnrads in eine zweite Drehrichtung, die der ersten Drehrichtung entgegengesetzt ist, blockiert.

Das Sperrelement hat insbesondere eine erste Sperrklinke, die zum Eingreifen in die Zähne des ersten Sperrklinken-Zahnrads ausgebildet ist, und eine zweite Sperrklinke, die zum Eingreifen in die Zähne des zweiten Sperrklinken-Zahnrads ausgebildet ist.

Auf diese Weise kann ein zuverlässiger Arretierungsmechanismus bereitgestellt werden, der es ermöglicht, die Freigaberichtung und die Blockaderichtung des Arretierungsmechanismus durch Schwenken des Sperrelements auf einfache Weise umzuschalten.

In einer Ausführungsform ist das Sperrelement zusätzlich in eine dritte Position ("Freilauf-Position") schwenkbar, in der keine der Sperrklinken in eines der Sperrklinken-Zahnräder eingreift, so dass sich die Sperrklinken-Zahnräder und die mit den Sperrklinken-Zahnrädern verbundene Welle in beide Richtungen drehen können.

In einer Ausführungsform umfasst der Radhalter auch einen Bremsmechanismus, der dazu ausgebildet ist die Bewegung der beweglichen Elemente von der in radialer Richtung auseinandergezogenen Position zurück in radialer Richtung nach innen abzubremsen. Durch einen solchen Bremsmechanismus kann die Gefahr von Beschädigungen und/oder Verletzungen, die durch schnell zurückschnappende bewegliche Elemente verursacht werden können, reduziert werden.

Der Bremsmechanismus kann insbesondere als Rotationsbremse ausgebildet sein. In einer Ausführungsform ist die Rotationsbremse als mit dem Kraftübertragungselement mitlaufendes Bremsrad des Spannmechanismus ausgebildet. Dabei ist das mitlaufende Bremsrad in einer ersten Richtung, die der Bewegungsrichtung der beweglichen Elemente radial nach außen entspricht, frei drehbar ist; und in einer zweiten, der ersten Richtung entgegengesetzten Richtung, die der Bewegungsrichtung der beweglichen Elemente radial nach innen entspricht, mit einem Widerstand drehbar.

Auf diese Weise können die beweglichen Element ohne zusätzlichen Kraftaufwand nach außen gezogen werden, um die Arme zu verlängern, so dass der Radhalter einfach auf das Rad aufgebracht werden kann. Gleichzeitig wird eine Bewegung der beweglichen Element nach innen durch den Bremsmechanismus abgebremst, so dass ein gefährliches "Zurückschnappen" der beweglichen Elemente und Klauen bzw. Krallen verhindert wird.

In einer Ausführungsform hat der Radhalter drei Arme, die es ermöglichen, den Radhalter sicher an dem Rad zu befestigen. Die drei Arme können insbesondere in einer symmetrischen Konfiguration mit gleichen Winkelabständen von 120° voneinander ausgerichtet sein, aber auch andere Winkelabstände sind möglich.

In anderen möglichen Ausführungsformen hat der Radhalter mehr als drei Arme.

In einer Ausführungsform ist an wenigstens einem der Arme ein Griff ausgebildet, der den Transport und die Handhabung des Radhalters, insbesondere das Auseinanderziehen eines der Arme, vereinfacht. Zusätzlich oder alternativ kann auch an dem Basiskörper ein Griff ausgebildet sein.

Ausführungsbeispiele der Erfindung umfassen auch Verfahren des Montierens eines Radhalters auf einem Rad und des Demontierens eines Radhalters von einem Rad.

Gemäß einem Ausführungsbeispiel der Erfindung umfasst ein Verfahren zum Montieren eines Radhalters, der gemäß einem Ausführungsbeispiel der Erfindung ausgebildet ist, an einem Rad, insbesondere an einem Rad eines Kraftfahrzeugs, die folgenden Schritte:
manuelles Ziehen eines beweglichen Elements radial nach außen, wobei das mit dem beweglichen Element verbundene Zugelement von dem Kopplungselement abgewickelt wird, wodurch sich auch das Zugelement des anderen beweglichen Elements bzw. die Zugelemente der anderen beweglichen Elemente von dem Kopplungselement abwickeln, so dass auch das andere bewegliche Element bzw. die anderen beweglichen Elemente durch deren Druckfeder(n), synchron nach außen bewegt werden;
zentriertes Aufsetzen des Radhalters auf das Rad des Kraftfahrzeugs, insbesondere mit seinen Klauen auf die Radlauffläche;
Loslassen des beweglichen Elements, wodurch aufgrund des von dem Triebelement auf das Kopplungselement ausgeübten Drehmoments die beweglichen Elemente der Arme nach innen gezogen werden, so dass der Radhalter auf dem Rad des Kraftfahrzeugs fixiert wird.

In einer Ausführungsform umfasst das Verfahren darüber hinaus, die beweglichen Elemente der Arme durch manuelles Betätigen eines Spannmechanismus zusätzlich festzuspannen und/oder durch Aktivieren eines Arretierungsmechanismus zu arretieren, um den Radhalter noch sicherer am Rad zu befestigen.

Gemäß einem Ausführungsbeispiel der Erfindung umfasst ein Verfahren zum Abmontieren eines Radhalters, der gemäß einem Ausführungsbeispiel der Erfindung ausgebildet ist, von einem Rad, insbesondere von einem Rad eines Kraftfahrzeugs, die folgenden Schritte:
ggf. manuelles Lösen eines zuvor aktivierten Arretierungsmechanismus;
manuelles Ziehen wenigstens eines beweglichen Elements radial nach außen, unter Abwickeln des Zugelements des beweglichen Elements von dem Kopplungselement, wodurch sich auch das Zugelement des anderen beweglichen Elements bzw. die Zugelemente der anderen beweglichen Elemente von dem Kopplungselement abwickeln, so dass auch das andere bewegliche Element bzw. die anderen beweglichen Elemente durch deren Druckfeder(n), synchron nach außen bewegt werden, wodurch sich die Klauen von der Radlauffläche lösen;
Abnehmen des Radhalters zur Seite hin;
Loslassen oder manuelles Rückführen des beweglichen Elements eines Arms, in eine in radialer Richtung innere Position,
synchronisiertes Rückführen des anderen beweglichen Elements des anderen Arms oder der anderen beweglichen Elemente der anderen Arme, in eine in radialer Richtung innere Position, durch Ziehen der beweglichen Elemente durch das auf das Kopplungselement einwirkende Triebelement und durch die Zugelemente in radialer Richtung nach innen.

In einer Ausführungsform umfasst das Verfahren, die Bewegung der beweglichen Elemente von der in radialer Richtung auseinandergezogenen Position zurück nach innen durch einen Bremsmechanismus, insbesondere durch eine Rotationsbremse zu bremsen, um ein schnelles Zurückschnappen der beweglichen Elemente zu verhindern.

Ein Ausführungsbeispiel eines erfindungsgemäßen Radhalters wird im Folgenden unter Bezugnahme auf die beigefügten Figuren näher beschrieben.
Figur 1 zeigt eine schematische Darstellung eines Rades mit einem an dem Rad montierten Radhalter.
Figur 2 zeigt eine perspektivische Ansicht eines Radhalters gemäß einem Ausführungsbeispiel der Erfindung.
Figur 3 zeigt eine Draufsicht auf den Radhalter von einer im montierten Zustand des in Figur 2 gezeigten Radhalters dem Rad zugewandt Rückseite des Radhalters.
Figur 4 zeigte eine Draufsicht auf den in den Figuren 2 und 3 gezeigten Radhalter von der im montierten Zustand vom Rad abgewandten Vorderseite des Radhalters.
Figur 5 zeigt eine Schnittansicht durch den den Figuren 2 bis 4 gezeigten Radhalter.
Figur 6 zeigt eine Schnittansicht durch einen äußeren Bereich eines der Arme eines erfindungsgemäß ausgebildeten Radhalters.
Figur 7 zeigt eine vergrößerte perspektivische Ansicht eines Arretierungsmechanismus eines erfindungsgemäß ausgebildeten Radhalters.

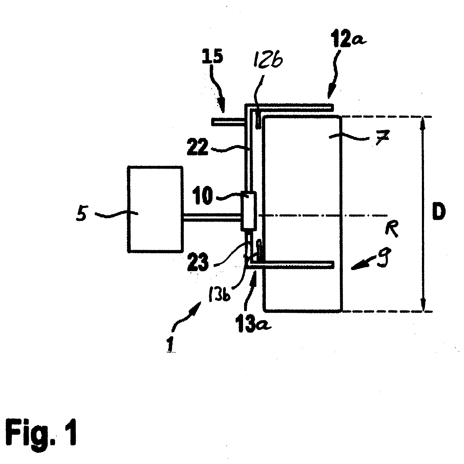

Die Figur 1 zeigt eine schematische Darstellung eines Rades 9 mit einem an dem Rad 9 montierten Radhalter ("Radadapter") 1, an dem eine Messplatte ("Target") 5 angebracht ist.

Der Radhalter 1 umfasst einen Basiskörper 10 und mehrere Arme 22, 23, die sich in radialer Richtung von dem Basiskörper 10 nach außen erstrecken. Der Radhalter 1 umfasst in der Regel drei Arme 22, 23, von denen in der Darstellung der Figur 1 nur zwei sichtbar sind.

An äußeren, von dem Basiskörper 10 abgewandten, Enden der Arme 22, 23 sind Klauen 12a, 13a ausgebildet, die sich im Wesentlichen rechtwinklig zu den Armen 22, 23 erstrecken. Die oder Klauen 12a, 13a sind dazu vorgesehen, an der Lauffläche 7 des Rades 9 anzuliegen, wenn der Radhalter 1 an dem Rad 9 angebracht ist, um den Radhalter 1 an dem Rad 9 zu fixieren.

An den Klauen 12a, 13a sind Abstandhalter 12b, 13b ausgebildet, die an der äußeren Flanke des Rades 9 anliegen, wenn der Radhalter 1 an dem Rad 9 angebracht ist, um die korrekte Ausrichtung des Radhalters 1 parallel zum Rad 9 bzw. orthogonal zur Rotationsachse R des Rades 9 sicherzustellen.

An einem der Arme 22, 23 ist ein Griff 15 ausgebildet, um den Transport und die Handhabung des Radhalters 1, insbesondere das Auseinanderziehen eines der Arme, zu vereinfachen. Zusätzlich oder alternativ kann auch an dem Basiskörper 10 ein Griff 15 ausgebildet sein.

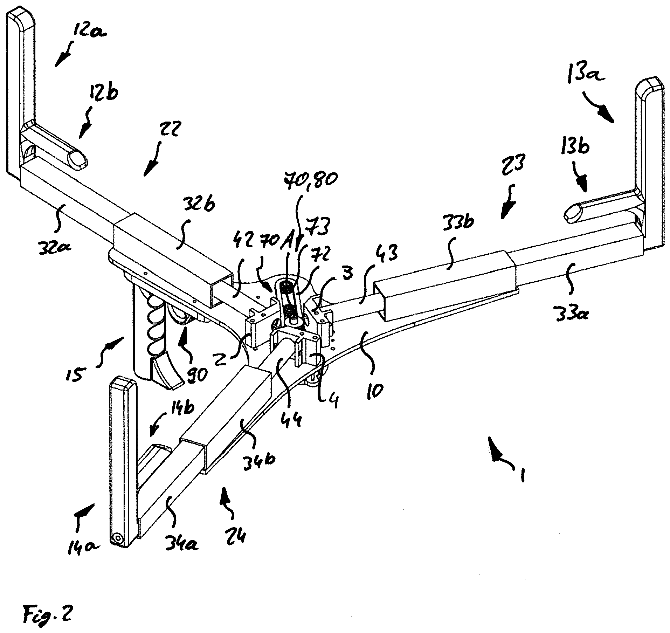

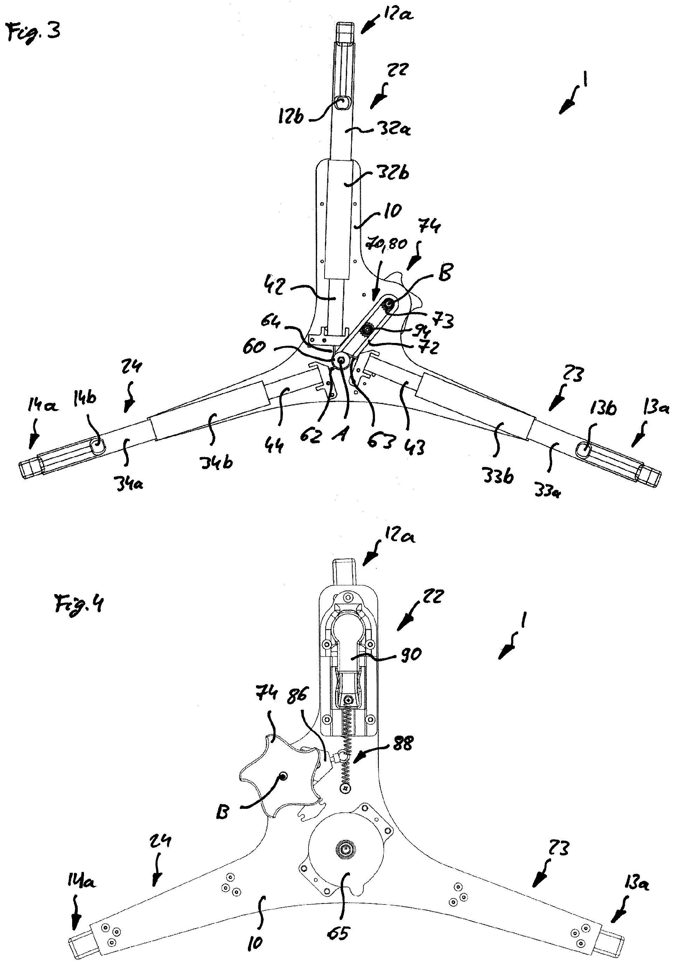

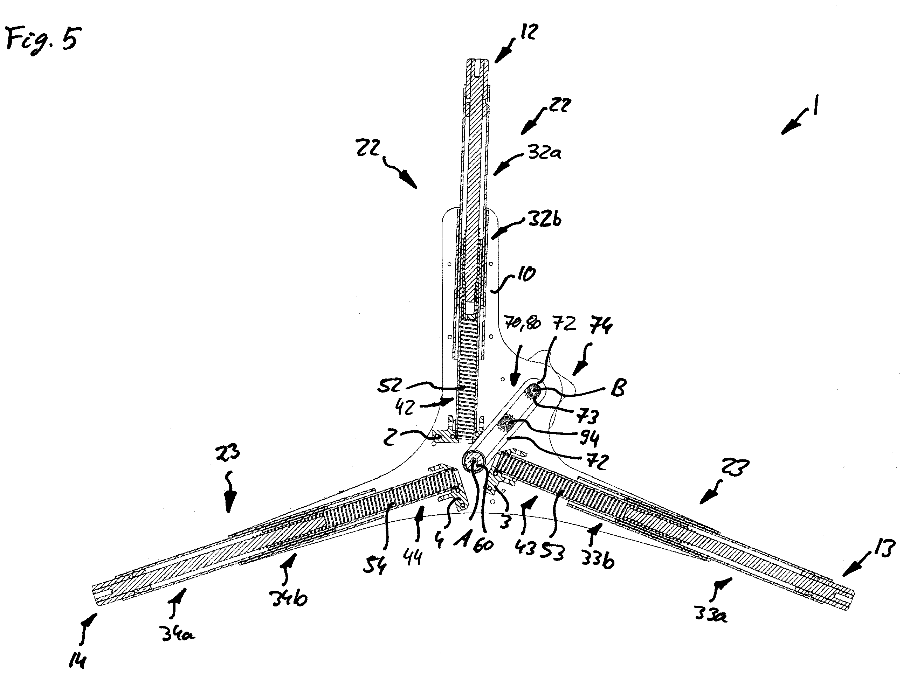

Die Figur 2 zeigt eine perspektivische Ansicht eines Radhalters 1 gemäß einem Ausführungsbeispiel der Erfindung. Figur 3 zeigt eine Draufsicht auf den Radhalter 1 von der im montierten Zustand des Radhalters 1 dem Rad 9 zugewandt Rückseite des Radhalters 1; Figur 4 zeigte eine Draufsicht auf den Radhalter 1 von der im montierten Zustand vom Rad 9 abgewandten Vorderseite des Radhalters 1; und Figur 5 zeigt eine Schnittansicht durch den Radhalter 1.

In dem in den Figuren 2 bis 5 gezeigte Radhalter 1 ist der Basiskörper 10 in Form einer Grundplatte 10 ausgebildet. Drei Arme 22, 23, 24 erstrecken sich von einem zentralen Bereich der Grundplatte 10 in radialer Richtung nach außen. Die Arme 22, 23, 24 erstrecken sich im Wesentlichen in einer gemeinsamen Ebene, die im Wesentlichen parallel zur Ebene der Grundplatte 10 ausgerichtet ist. Die drei Arme 22, 23, 24 können, müssen aber nicht, in gleichen Winkelabständen von 120° zueinander um einen zentralen Bereich des Radhalters 1 ausgerichtet sein.

An äußeren, von der Grundplatte 10 abgewandten, Enden der Arme 22, 23, 24 sind Klauen 12a, 13a, 14a ausgebildet, die sich im Wesentlichen rechtwinklig zu der Ebene der Arme 22, 23, 24 erstrecken. Die Klauen 12a, 13a, 14a sind dazu vorgesehen, an der Lauffläche 7 eines Rades 9 anzuliegen, wenn der Radhalter 1 an dem Rad 9 angebracht ist, um den Radhalter 1 an dem Rad 9 zu fixieren, wie es in der Figur 1 gezeigt ist.

An den Klauen 12a, 13a, 14a sind Abstandhalter 12b, 13b, 14b ausgebildet, die sich im Wesentlichen parallel zu den Armen 22, 23, 24 erstrecken. Die Abstandhalter 12b, 13b, 14b sind dazu vorgesehen, an der Flanke des Rades 9 anzuliegen, wenn der Radhalter 1 an dem Rad 9 montiert ist, um sicherzustellen, dass der Radhalter 1 im richtigen Abstand von dem Rad 9 angeordnet und in der richtigen Ausrichtung, insbesondere orthogonal zur Rotationsachse R des Rades 9, ausgerichtet ist (vgl. Figur 1).

Die Arme 22, 23, 24 umfassen jeweils ein stationäres inneres Element 32b, 33b, 34b, das fest mit der Grundplatte 10 verbunden oder integral mit der Grundplatte ausgebildet ist, und ein bewegliches äußeres Element 32a, 33a, 34a, das gegenüber dem jeweiligen stationären inneren Element 32b, 33b, 34b in radialer Richtung verschiebbar ist. Die beweglichen äußeren Elemente 32a, 33a, 34a sind insbesondere als in radialer Richtung verschiebbare Schlitten ausgebildet, die wenigstens teilweise von dem zugehörigen stationären inneren Element 32b, 33b, 34b umschlossen sind. Auf diese Weise bilden die beweglichen äußeren Elemente 32a, 33a, 34a und die stationären inneren Elemente 32b, 33b, 34b zusammen an jedem der Arme 22, 23, 24 jeweils einen Teleskopmechanismus. In nicht in den Figuren gezeigten Ausführungsbeispielen kann jeder Teleskopmechanismus auch mehrere bewegliche Elemente 32a, 33a, 34a umfassen, die entlang einer gemeinsamen Achse gegeneinander beweglich sind.

Die Länge der Arme 22, 23, 24 kann somit durch Bewegen, insbesondere Verschieben, der äußeren Elemente 32a, 33a, 34a gegenüber den inneren Elementen 32b, 33b, 34b variiert werden.

Jeder Arm 22, 23, 24 umfasst jeweils eine von einer Verkleidung, insbesondere einer Hülse, 42, 43, 44 umgebene Druckfeder 52, 53, 54 (siehe Figur 5). Jede Druckfeder 52, 53, 54 ist derart zwischen einem inneren Ende des beweglichen äußeren Elements 32a, 33a, 34a des jeweiligen Armes 22, 23, 24 und einer an der Grundplatte 10 ausgebildeten Abstützfläche 2, 3, 4 abgestützt, dass sie das jeweilige äußere Element 32a, 33a, 34a von einem zentralen Bereich der Grundplatte 10 in radialer Richtung nach außen drückt. Die Druckfedern 52, 53, 54 sind also bestrebt, die Länge der Arme 22, 23, 24 zu verlängern. In dem in den Figuren 2 bis 5 gezeigten Ausführungsbeispiel sind die Abstützflächen 2, 3, 4 als Abstützelemente 2, 3, 4 ausgebildet, die auf der Grundplatte 10 angeordnet sind. Die Abstützelemente 2, 3, 4 können auf der Grundplatte 10 angebracht oder integral mit der Grundplatte 10 ausgebildet sein.

Im zentralen Bereich der Grundplatte 10 befindet sich eine zentrale Seilrolle 60.

Mit der Seilrolle 60 ist für jeden der Arme 22, 23, 24 ein Zugelement 62, 63, 64 verbunden. Die Seilrolle 60 bildet so ein Kopplungselement 60, welches die Zugelemente 62, 63, 64 mechanisch miteinander koppelt. Die Zugelemente 62, 63, 64 sind insbesondere als Seilstränge 62, 63, 64 ausgebildet. Die Zugelemente / Seilstränge 62, 63, 64 können aus Metall, insbesondere aus Stahlseilen, oder einem geeigneten Kunststoffmaterial, z.B. Nylon, ausgebildet sein.

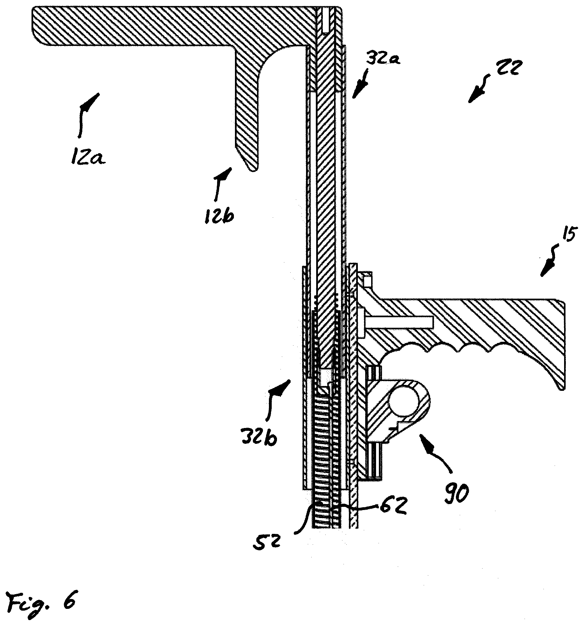

Die von der Seilrolle 60 abgewandten äußeren Enden der Zugelemente 62, 63, 64 sind jeweils mit einem inneren Ende des jeweiligen beweglichen äußeren Elements 32a, 33a, 34a verbunden. Dies ist insbesondere in der Figur 6 zu erkennen, die einen Schnittansicht durch einen äußeren Bereich eines der Arme 22, 23, 24 eines erfindungsgemäß ausgebildeten Radhalters 1 zeigt. Figur 6 zeigt auch, dass die Zugelemente 62, 63, 64 zwischen der Seilrolle 60 und dem inneren Ende des jeweiligen beweglichen äußeren Elements 32a, 33a, 34a in radialer Richtung durch einen hohlen Innenraum der jeweiligen Druckfeder 52, 53, 54 verlaufen.

Durch Drehen der Seilrolle 60 um eine zentrale Welle A, die drehbar an der Grundplatte 10 gelagert ist, können die Zugelemente 62, 63, 64 auf die Seilrolle 60 aufgewickelt und von der Seilrolle 60 abgewickelt werden. Die Länge der Zugelemente 62, 63, 64 ist somit durch Drehen der Seilrolle 60 variierbar.

Die beweglichen äußeren Elemente 32a, 33a, 34a können daher durch Drehen der Seilrolle 60 um die zentrale Welle A gegen die Kraft der Druckfedern 52, 53, 54 in radialer Richtung nach innen zum zentralen Bereich der Grundplatte 10 gezogen werden. Durch Fixieren der Seilrolle 60 können die beweglichen äußeren Elemente 32a, 33a, 34a in einer gewünschten Position festgehalten werden.

Die Seilrolle 60 ist durch die zentrale Welle A, die sich zwischen der Vorderseite und der Rückseite des Radhalters 1 durch die Grundplatte 10 erstreckt, mit einem elastischen Triebelement 65 verbunden. Das elastische Triebelement 65 ist beispielsweise eine Spiralfeder 65 und dazu ausgebildet, die Seilrolle 60 derart anzutreiben, dass die beweglichen äußeren Elemente 32a, 33a, 34a von den Zugelementen 62, 63, 64 gegen die Kraft der Druckfedern 52, 53, 54 in radialer Richtung nach innen, d.h. zur zentralen Welle A, gezogen werden.

Das elastische Triebelement 65 und die Druckfedern 52, 53, 54 sind dabei so konfiguriert, dass die von dem elastischen Triebelement 65 über die Seilrolle 60 und die Zugelemente 62, 63, 64 auf ein bewegliches Element 32a, 33a, 34a ausgeübte nach innen gerichtete Kraft größer als die nach außen gerichtete Kraft ist, die von der jeweiligen Druckfeder 52, 53, 54 auf das jeweilige bewegliche Element 32a, 33a, 34a ausgeübt wird. Es verbleibt somit eine nach innen gerichtete resultierende Kraft, welche die beweglichen äußeren Elemente 32a, 33a, 34a zum zentralen Bereich der Grundplatte 10 in radialer Richtung nach innen zieht.

In dem in den Figuren 2 bis 5 gezeigten Ausführungsbeispiel sind die Seilrolle 60 und das elastische Triebelement 65 auf verschiedenen Seiten der Grundplatte 10 angeordnet. In anderen, nicht in den Figuren gezeigten, Ausführungsbeispielen können die Seilrolle 60 und das elastische Triebelement 65 auch auf der gleichen Seite der Grundplatte 10 angeordnet sein.

Um den Radhalter 1 an einem Rad 9 zu montieren, wie es in der Figur 1 gezeigt ist, werden die beweglichen äußeren Elemente 32a, 33a, 34a gegen die resultierende, nach innen wirkende Kraft von einem Benutzer mit Muskelkraft nach außen gezogen, um die Arme 22, 23, 24 so weit verlängern, dass der Radhalter 1 auf das Rad 9 aufgebracht werden kann.

Dabei reicht es aus, an einem der beweglichen äußeren Elemente 32a, 33a, 34a anzugreifen und es gegenüber der Grundplatte 10 nach außen zu ziehen. Die Bewegung eines der beweglichen äußeren Elemente 32a, 33a, 34a bewirkt eine Drehung der Seilrolle 60. Durch die Drehung der Seilrolle 60 werden die Zugelemente 62, 63, 64 der anderen, nicht unmittelbar vom Benutzer bewegten beweglichen äußeren Elemente 32a, 33a, 34a entlastest und die beweglichen Elemente 32a, 33a, 34a der anderen Arme 22, 23, 24 werden von ihrer jeweiligen Druckfeder 52, 53, 54 nach außen gedrückt.

Die Kombination aus Druckfedern 52, 53, 54, Zugelementen 62, 64, 64, Seilrolle 40 und Triebelement 65 bildet somit ein Synchronisationssystem, welches bewirkt, dass sich alle beweglichen äußeren Elemente 32a, 33a, 34a synchron in radialer Richtung nach außen bewegen, wenn eines der beweglichen äußeren Elemente 32a, 33a, 34a nach außen gezogen wird.

Ebenso bewegen sich alle beweglichen äußeren Elemente 32a, 33a, 34a unter dem Einfluss des Triebelements 65 synchron in radialer Richtung nach innen, wenn das nach außen gezogene bewegliche Element 32a, 33a, 34a losgelassen oder nach innen bewegt wird, nachdem der Radhalter 1 auf das Rad 9 aufgebracht worden ist. Durch die zuvor beschriebenen nach innen gerichteten resultierenden Kräfte wird der Radhalter 1 am Rad 9 fixiert, wie es schematisch in der Figur 1 gezeigt ist.

Um den Radhalter 1 noch sicherer am Rad 9 fixieren zu können, ist zusätzlich ein Spann- und Arretierungsmechanismus 70, 80 vorgesehen.

Der Spann- und Arretierungsmechanismus 70, 80 umfasst einen Spannmechanismus 70, der es ermöglicht, zusätzliche, nach innen gerichtete Kräfte auf die beweglichen äußeren Elemente 32a, 33a, 34a aufzubringen, welche die beweglichen äußeren Elemente 32a, 33a, 34a noch fester gegen die Lauffläche 7 des Rades 9 drücken, wenn der Radhalter 1 an dem Rad 9 montiert ist.

Darüber hinaus umfasst der Spann- und Arretierungsmechanismus 70, 80 einen Arretierungsmechanismus 80, der es ermöglicht, die beweglichen äußeren Elemente 32a, 33a, 34a in einer Position, in der die Klauen 12, 13, 14 an der Lauffläche 7 des Rades 9 anliegen, zu arretieren, um die erhöhte Anpresskraft aufrecht zu erhalten, ohne dauerhaft von außen auf den Radhalter 1 einzuwirken.

Obwohl der Spannmechanismus 70 und der Arretierungsmechanismus 80 in dem in den Figuren gezeigten Ausführungsbeispiel zu einem Spann- und Arretierungsmechanismus 70, 80 zusammengefasst sind, können der Spannmechanismus 70 und der Arretierungsmechanismus 80 in weiteren, nicht explizit in den Figuren gezeigten Ausführungsbeispielen, auch unabhängig voneinander ausgebildet sein.

Der in den Figuren gezeigte Spann- und Arretierungsmechanismus 70, 80 umfasst ein Kraftübertragungselement 72, z.B. eine Kette oder einen Riemen, das in Wirkverbindung mit der Seilrolle 60 steht und es ermöglicht, ein zusätzliches Drehmoment auf die Seilrolle 60 aufzubringen.

Das Kraftübertragungselement 72 kann beispielsweise in eine in den Figuren nicht sichtbare Verzahnung eingreifen, die auf dem äußeren Umfang der zentralen Welle A ausgebildet ist, auf der die Seilrolle 60 und das elastische Triebelement 65 montiert sind.

Das Kraftübertragungselement 72 steht darüber hinaus, insbesondere über ein weiteres Zahnrad 73, in Wirkverbindung mit einer zweiten Welle B, die dezentral, d.h. außerhalb des zentralen Bereichs, an der Grundplatte 10, angebracht ist. An der zweiten Welle B ist ein manuell betätigbares Betätigungselement 74, beispielsweise ein Handrad oder Hebel, vorgesehen.

In dem in den Figuren 2 bis 5 gezeigten Ausführungsbeispiel befindet sich das Kraftübertragungselement 72 auf der Rückseite des Radhalters 1, und das manuell betätigbare Betätigungselement 74 ist auf der Vorderseite des Radhalters 1 angeordnet, so dass es leicht zu betätigen ist, wenn der Radhalter 1 an einem Rad 9 angebracht ist. In anderen Ausführungsbeispielen kann auch das Kraftübertragungselement 72 auf der Vorderseite des Radhalters 1 angeordnet sein.

Durch manuelles Drehen des weiteren Zahnrads 73, insbesondere mit Hilfe des Betätigungselements 74, kann über das Kraftübertragungselement 72 ein zusätzliches Drehmoment auf die Seilrolle 60 aufgebracht werden. Auf diese Weise können über die Zugelemente 62, 63, 64 zusätzliche, nach innen wirkende Kräfte auf die beweglichen äußeren Elemente 32a, 33a, 34a aufgebracht werden. Durch die zusätzlichen Kräfte werden die beweglichen äußeren Elemente 32a, 33a, 34a nach innen gezogen, so dass die Klauen 12a, 13a, 14a noch fester gegen die Lauffläche 7 des Rades 9 gedrückt werden und der Radhalter 1 noch sicherer am Rad 9 fixiert wird.

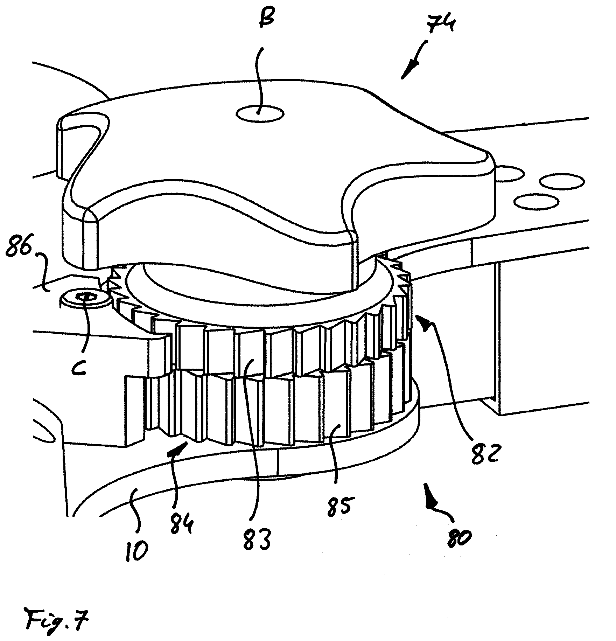

An der zweiten Welle B ist zusätzlich auch ein Arretierungsmechanismus 80 ausgebildet, der es ermöglicht, ein auf die Seilrolle 60 aufgebrachtes zusätzliches Drehmoment aufrechtzuerhalten, ohne das Betätigungselement 74 manuell festhalten zu müssen. Figur 7 zeigt eine vergrößerte perspektivische Ansicht des Arretierungsmechanismus 80.

Der Arretierungsmechanismus 80 umfasst zwei an der zweiten Welle B koaxial übereinander angebrachte Sperrklinken-Zahnräder 82, 84. Die Zähne 83, 85 der beiden Sperrklinken-Zahnräder 82, 84 weisen in einer ersten Drehrichtung jeweils steile Flanken und in einer zweiten, entgegengesetzten Drehrichtung, flache Flanken auf.

Die beiden Sperrklinken-Zahnräder 82, 84 sind so angeordnet, dass die steilen und die flachen Flanken der Zähne 83, 85 der beiden Sperrklinken-Zahnräder 82, 84 in entgegengesetzte Drehrichtungen ausgerichtet sind. D.h., die flachen Flanken der Zähne 83 des ersten Sperrklinken-Zahnrads 82 sind in der gleichen Drehrichtung ausgerichtet wie die steilen Flanken der Zähne 85 des zweiten Sperrklinken-Zahnrads 84, und die steilen Flanken der Zähne 83 des ersten Sperrklinken-Zahnrads 82 sind in der gleichen Drehrichtung ausgerichtet wie die flachen Flanken der Zähne 85 des zweiten Sperrklinken-Zahnrads 84.

Der Arretierungsmechanismus 80 umfasst auch ein beweglich an der Grundplatte 10 angebrachtes Sperrelement 86 mit zwei Sperrklinken 87, die durch Bewegen des Sperrelements 86 wahlweise in Eingriff mit den Zähnen 83, 85 eines der beiden Sperrklinken-Zahnräder 82, 84 bringbar sind. In der Figur 7 ist nur eine Sperrklinke 87 sichtbar, da die zweite Sperrklinke 87 auf der vom Betrachter abgewandten Rückseite des Sperrelements 86 ausgebildet ist.

Das Sperrelement 86 ist insbesondere um eine orthogonal zur Grundplatte 10 ausgerichtete Schwenkachse C zwischen einer ersten Position, in der eine erste Sperrklinke 87 im Eingriff mit den Zähnen 83 des ersten Sperrklinken-Zahnrads 82 ist, und einer zweiten Position, in der eine in der Figur 7 nicht sichtbare zweite Sperrklinke 87 im Eingriff mit den Zähnen 85 des zweiten Sperrklinken-Zahnrads 84 ist, schwenkbar.

Das Sperrelement 86 ist mit einem Umschaltmechanismus verbunden, der insbesondere eine Feder 88 und ein Umschaltelement 90 umfasst (siehe Figuren 4 und 6). Durch Betätigen des Umschaltelements 90 kann das Sperrelement 86 zwischen der ersten und der zweiten Position bewegt werden.

Wenn sich das Sperrelement 86 in seiner ersten Position befindet, schlägt die erste Sperrklinke 87 gegen die steilen Flanken der Zähne 83 des ersten Sperrklinken-Zahnrads 82 an und blockiert so eine Drehung der zweiten Welle B in einer ersten Drehrichtung, insbesondere eine Drehung im Uhrzeigersinn. Die flachen Flanken der Zähne 83 des ersten Sperrklinken-Zahnrads 82 ermöglichen eine Drehung der zweiten Welle B in einer entgegengesetzten zweiten Drehrichtung, insbesondere gegen Uhrzeigersinn. Die zweite (in der Figur 7 nicht sichtbare) Sperrklinke 87 ist nicht im Eingriff mit dem zweiten Sperrklinken-Zahnrad 84, wenn sich das Sperrelement 86 in seiner ersten Position befindet.

Wenn sich das Sperrelement 86 in seiner zweiten Position befindet, ist die erste Sperrklinke 87 nicht im Eingriff mit den Zähnen 83 des ersten Sperrklinken-Zahnrads 82. Die zweite (in der Figur 7 nicht sichtbare) Sperrklinke 87 schlägt dann gegen die steilen Flanken der Zähne 85 des zweiten Sperrklinken-Zahnrads 84 an und blockiert so eine Drehung der zweiten Welle B in der zweiten Drehrichtung, insbesondere eine Drehung gegen den Uhrzeigersinn. Wenn sich das Sperrelement 86 in der zweiten Position befindet, ermöglichen die flachen Flanken der Zähne 85 des zweiten Sperrklinken-Zahnrads 84 eine Drehung der zweiten Welle B in einer entgegengesetzten ersten Drehrichtung, insbesondere eine Drehung im Uhrzeigersinn.

Optional kann das Sperrelement 86 auch in eine dritte (mittlere) Position ("Freilauf-Position") schwenkbar sein, in der keine der beiden Sperrklinken 87 in die Zähne 83, 85 eines der beiden Sperrklinken-Zahnräder 82, 84 eingreift, so dass die zweite Welle B in beide Richtungen frei drehbar ist, wenn sich das Sperrelement 86 in der Freilauf-Position befindet.

Um den Radhalter 1 an einem Rad 9 zu montieren, wird das Sperrelement 86 in seine erste Position gebracht. Der Arretierungsmechanismus 80 ermöglicht es dann einem Benutzer, die beweglichen äußeren Elemente 32a, 33a, 34a mit Muskelkraft nach außen zu ziehen. Eine Bewegung der äußeren Elemente 32a, 33a, 34a nach innen wird durch den Arretierungsmechanismus 80 blockiert.

Die beweglichen äußeren Elemente 32a, 33a, 34a können so, insbesondere durch Ziehen an einem der beweglichen äußeren Elemente 32a, 33a, 34a, in eine Konfiguration gebracht werden, in der die radialen Abstände zwischen den Klauen 12a, 13a, 14a so groß sind, dass der Radhalter 1 auf das Rad 9 aufgebracht werden kann. Aufgrund der blockierenden Wirkung des Arretierungsmechanismus 80 verbleiben die äußeren Elemente 32a, 33a, 34a in dieser Position, auch wenn vom Benutzer keine äußere Kraft mehr auf die äußeren Elemente 32a, 33a, 34a aufgebracht wird, und der Radhalter 1 kann mit den verlängerten Armen 22, 23, 24 bequem auf das Rad 9 aufgebracht werden.

Nachdem der Radhalter 1 auf das Rad 9 aufgebracht worden ist, wird das Sperrelement 86 durch Betätigen des Umschaltelements 90 in die zweite Position gebracht. Wenn sich das Sperrelement 86 in seiner zweiten Position befindet, ermöglicht der Arretierungsmechanismus 80, dass sich die beweglichen äußeren Elemente 32a, 33a, 34a unter dem Einfluss der von dem elastischen Triebelement 65 über die Seilrolle 60 und die Zugelemente 62, 63, 64 ausgeübten Kräfte in Richtung auf den zentralen Bereich der Grundplatte 10 nach innen bewegen. Dadurch werden die Klauen 12a, 13a, 14a gegen die Lauffläche 7 des Rades 9 gedrückt und der Radhalter 1 wird an dem Rad 9 fixiert.

Durch Drehen der zweiten Welle B, z.B. mit Hilfe des Betätigungselements 74, kann eine zusätzliche nach innen gerichtete Kraft auf die beweglichen äußeren Elemente 32a, 33a, 34a ausgeübt werden, um den Radhalter 1 noch sicherer an dem Rad 9 zu fixieren, wie es zuvor beschrieben worden ist.

Solange sich das Sperrelement 86 in der zweiten Position befindet, verhindert der Arretierungsmechanismus 80, dass sich die beweglichen äußeren Elemente 32a, 33a, 34a mit den Klauen 12a, 13a, 14a wieder nach außen bewegen, auch wenn das Betätigungselement 74 losgelassen wird. Der Radhalter 1 bleibt daher auch nach dem Loslassen des Betätigungselements 74 sicher am Rad 9 fixiert.

Soll der Radhalter 1 wieder vom Rad 9 entfernt werden, wird das Sperrelement 86 durch Betätigen des Umschaltelements 90 in seine erste oder dritte Position bewegt. Wenn sich das Sperrelement 86 in der ersten oder in der dritten Position befindet, ermöglicht der Arretierungsmechanismus 80, dass sich die beweglichen äußeren Elemente 32a, 33a, 34a in radialer Richtung nach außen bewegen, so dass die Klauen 12a, 13a, 14a nicht mehr an der Lauffläche 7 des Rades 9 anliegen und der Radhalter 1 sicher und bequem vom Rad 9 abgenommen werden kann.

Um unkontrollierte schnelle Bewegungen der beweglichen äußeren Elemente 32a, 33a, 34a, die zu Beschädigungen am Fahrzeug und/oder Verletzungen des Benutzers führen können, zu verhindern, weist der Radhalter 1 zusätzlich einen Bremsmechanismus 92 auf. Der Bremsmechanismus 92 ist dazu ausgebildet, Bewegungen der beweglichen äußeren Elemente 32a, 33a, 34a in wenigstens einer radialen Richtung zu dämpfen bzw. zu bremsen. Der Bremsmechanismus 92 ist insbesondere dazu ausgebildet, Bewegungen der beweglichen äußeren Elemente 32a, 33a, 34a nach innen zu dämpfen.

In dem in den Figuren gezeigten Ausführungsbeispiel ist der Bremsmechanismus 92 als Rotationsbremse 92 ausgebildet. Der als Rotationsbremse 92 ausgebildete Bremsmechanismus 92 umfasst ein Bremsrad 94, insbesondere ein als Zahnrad ausgebildetes Bremsrad 94, das in Wirkverbindung, insbesondere im Eingriff, mit dem Kraftübertragungselement 72 steht.

Die Rotationsbremse 92 ist so ausgebildet, dass das Bremsrad 94 in einer ersten Drehrichtung, die der Bewegung der beweglichen äußeren Elemente 32a, 33a, 34a nach außen entspricht, frei drehbar ist, um ein einfaches Auseinanderziehen der beweglichen äußeren Elemente 32a, 33a, 34a zu ermöglichen. In einer der ersten Drehrichtung entgegengesetzten zweiten Drehrichtung, die der Bewegung der beweglichen äußeren Elemente 32a, 33a, 34a nach innen entspricht, wird die Drehung des Bremsrades 94 durch einen geeignet ausgebildeten Bremsmechanismus gebremst, so dass es die Bewegung des Kraftübertragungselements 72 und damit auch die Bewegung der beweglichen äußeren Elemente 32a, 33a, 34a bremst.

In einem alternativen Ausführungsbeispiel kann der Bremsmechanismus 92 auch so ausgebildet sein, dass er die Drehung des Bremsrades 94 in beiden Richtungen bremst, so dass die Bewegungen der beweglichen äußeren Elemente 32a, 33a, 34a in beiden Richtungen gebremst werden.

In weiteren Ausführungsbeispielen, die nicht in den Figuren gezeigt sind, kann der Bremsmechanismus 92 auch direkt auf einer der Wellen A, B angeordnet sein und direkt auf die Seilrolle 60 bzw. das Betätigungselement 74 einwirken.

## Patentansprüche

1. Radhalter (1) zur klemmenden Befestigung an einem Rad (9), insbesondere an einem Rad (9) eines Kraftfahrzeugs, und zur Befestigung eines Targets (5) oder Sensors zur Fahrwerksvermessung, aufweisend:
einen Basiskörper (10) mit einem zentralen Bereich;
wenigstens zwei, insbesondere drei, Arme (22, 23, 24), die sich von dem zentralen Bereich des Basiskörpers (10) in radialer Richtung nach außen erstrecken;
wobei jeder der Arme (22, 23, 24) aufweist:
ein bewegliches Element (32a, 33a, 34a), das gegenüber dem Basiskörper (10) in radialer Richtung beweglich ist, um die Länge des Armes (22, 23, 24) in radialer Richtung zu variieren;
eine Druckfeder (52, 53, 54), die dazu angeordnet und ausgebildet ist, das bewegliche Element (32a, 33a, 34a) in radialer Richtung nach außen zu drücken; und
ein Zugelement (62, 63, 63), das mechanisch mit dem beweglichen Element (32a, 33a, 34a) gekoppelt und dazu angeordnet und ausgebildet ist, das bewegliche Element (32a, 33a, 34a) in radialer Richtung nach innen zu ziehen; und
wobei der Radhalter (1) ein Kopplungselement (60) aufweist, das die Zugelemente (62, 63, 63) der wenigstens zwei Arme (22, 23, 24) mechanisch miteinander koppelt.

2. Radhalter (1) nach Anspruch 1,
wobei jeder der Arme (22, 23, 24) ein stationäres Element (32a, 33a, 34a) aufweist, das fest mit dem Basiskörper (10) verbunden oder integral mit dem Basiskörper (10) ausgebildet ist;
wobei das bewegliche Element (32a, 33a, 34a) gegenüber dem stationären Element (32a, 33a, 34a) in radialer Richtung verschiebbar ist, wobei das bewegliche Element (32a, 33a, 34a) insbesondere als gegenüber dem stationären Element (32a, 33a, 34a) geführter oder wenigstens teilweise von dem stationären Element (32a, 33a, 34a) umschlossener Schlitten ausgebildet ist; und
wobei das bewegliche Element (32a, 33a, 34a) an einem äußeren Ende eine Klaue (12a, 13a, 14a) zur Anlage an einer Reifenlauffläche (7) des Rades (9) und/ oder einen Abstandshalter (12b, 13b, 14b) zur Anlage an einer Reifenflanke des Rades (9) aufweist.

3. Radhalter (1) nach einem der vorhergehenden Ansprüche,
wobei die Druckfeder (52, 53, 54) jedes Arms (22, 23, 24) mit einem ersten Ende an dem Basiskörper (10), insbesondere an einer Abstützfläche (2, 3, 4) des Basiskörpers (10), abgestützt ist und mit einem zweiten Ende an dem beweglichen Element (32a, 33a, 34a), insbesondere an einem in radialer Richtung inneren Ende des beweglichen Elements (32a, 33a, 34a), abgestützt ist;
wobei die Druckfeder (52, 53, 54) jedes Arms (22, 23, 24) insbesondere wenigstens teilweise von einer Verkleidung (42, 43, 44) umgeben ist.

4. Radhalter (1) nach einem der vorhergehenden Ansprüche,
wobei der Radhalter (1) zusätzlich einen Spannmechanismus (70) aufweist, der dazu ausgebildet ist, eine zusätzliche in radialer Richtung nach innen wirkende Spannkraft auf die beweglichen Elemente (32a, 33a, 34a) aufzubringen.

5. Radhalter (1) nach Anspruch 4,
wobei der Spannmechanismus (70) ein mechanisch mit den beweglichen Elementen gekoppeltes, manuell betätigbares Betätigungselement (74), insbesondere einen Hebel oder ein Drehknauf, umfasst;
wobei das Betätigungselement (74) in einem radialen Abstand von der zentralen Seilrolle (60) und insbesondere auf einer Vorderseite des Radhalters (1) angeordnet, und mittels eines Kraftübertragungselements (72), insbesondere mittels eines Riemens oder einer Kette, insbesondere auf einer Rückseite des Radhalters (1), mit dem Kopplungselement (60) wirkverbunden ist, so dass ein manuell über das Betätigungselement (74) aufgebrachtes Drehmoment über das Kraftübertragungselement (72) an das Kopplungselement (60) übertragbar ist, wodurch die Zugelemente (62, 63, 63) zusätzliche in radialer Richtung nach innen wirkende Spannkräfte auf die beweglichen Elemente (32a, 33a, 34a) ausüben.

6. Radhalter (1) nach einem der vorhergehenden Ansprüche,
wobei der Radhalter (1) zusätzlich einen Arretierungsmechanismus (80) aufweist, der dazu ausgebildet ist, die Bewegung der beweglichen Elemente (32a, 33a, 34a) in wenigstens einer radialen Richtung zu blockieren, und insbesondere die Bewegung der beweglichen Elemente (32a, 33a, 34a) in einer ersten radialen Richtung zu blockieren und in einer zweiten radialen Richtung, die der ersten Richtung entgegengesetzt ist, freizugeben;
wobei der Arretierungsmechanismus (80) insbesondere zwischen einem ersten Zustand, in dem die Bewegung der beweglichen Elemente (32a, 33a, 34a) in einer ersten radialen Richtung blockiert und in einer zweiten radialen Richtung, die der ersten radialen Richtung entgegengesetzt ist, freigegeben ist, und einem zweiten Zustand, in dem die Bewegung der beweglichen Elemente (32a, 33a, 34a) in der ersten radialen Richtung freigegeben und in der zweiten radialen Richtung blockiert ist, umschaltbar ist.

7. Radhalter (1) nach Anspruch 6,
wobei der Arretierungsmechanismus (80) wenigstens ein Sperrklinken-Zahnrad (82, 84) und wenigstens ein zum Eingreifen in die Zähne (83, 85) des Sperrklinken-Zahnrads (82, 84) ausgebildete Sperrelement (86) umfasst;
wobei die Zähne (83, 85) des wenigstens einen Sperrklinken-Zahnrads (82, 84) steile und flache Flanken aufweisen und das Sperrelement (86) so angeordnet ist, dass es in eine Sperrposition schwenkbar ist, in der eine Sperrklinke (87) des Sperrelements (86) zwischen einer steilen und einer flachen Flanke der Zähne (83, 85) des Sperrklinken-Zahnrads (82, 84) eingreift, wobei es gegen die steile Flanke anschlägt und so eine Drehung des Sperrklinken-Zahnrads (82, 84) blockiert;
wobei das wenigstens eine Sperrklinken-Zahnrad (82, 84) insbesondere auf einer Welle (A, B) des Kopplungselements (60) oder des Betätigungselements (74) angeordnet ist.

8. Radhalter (1) nach Anspruch 7,
wobei zwei Sperrklinken-Zahnräder (82, 84) mit jeweils unterschiedlicher Ausrichtung der steilen und flachen Flanken koaxial übereinander auf einer gemeinsamen Welle (B) angeordnet sind,
wobei das Sperrelement (86) durch einen Umschaltmechanismus (88, 90) zwischen mindestens zwei Positionen schwenkbar ist, nämlich einer ersten Position, in der eine Sperrklinke (87) des Sperrelements (86) zwischen einer steilen und einer flachen Flanke der Zähne (83, 85) des ersten Sperrklinken-Zahnrads (82, 84) eingreift, wobei es gegen die steile Flanke anschlägt und eine Drehung des ersten Sperrklinken-Zahnrads (82, 84) in eine erste Drehrichtung blockiert, und einer zweiten Position, in der eine Sperrklinke (87) des Sperrelements (86) zwischen einer steilen und einer flachen Flanke der Zähne (83, 85) des zweiten Sperrklinken-Zahnrads (82, 84) eingreift, wobei es gegen die steile Flanke anschlägt und eine Drehung des zweiten Sperrklinken-Zahnrads (82, 84) in eine zweite Drehrichtung blockiert, die der ersten Drehrichtung entgegengesetzt ist;
wobei das Sperrelement (86) insbesondere in eine dritte Freilauf-Position schwenkbar ist, in das Sperrelement (86) in keines der Sperrklinken-Zahnräder (82, 84) eingreift, so dass der Arretierungsmechanismus (80) Drehungen der Welle (B) in beide Richtungen erlaubt.

9. Radhalter (1) nach einem der vorhergehenden Ansprüche,
weiterhin aufweisend einen Bremsmechanismus (94), der dazu ausgebildet ist, die Bewegung der beweglichen Elemente (32a, 33a, 34a) aus den auseinandergezogenen Positionen in radialer Richtung nach innen abzubremsen;
wobei der Bremsmechanismus (92) insbesondere als Rotationsbremse mit einem mit dem Kraftübertragungselement (72), insbesondere dem Riemen oder der Kette, des Spannmechanismus (70) mitlaufenden Bremsrad (94) ausgebildet ist;
wobei das Bremsrad (94) in einer Richtung, die der Bewegungsrichtung der beweglichen Elemente (32a, 33a, 34a) radial nach innen entspricht, mit Widerstand drehbar ist; und
wobei das Bremsrad (94) insbesondere in einer entgegengesetzten Richtung, die der Bewegungsrichtung der beweglichen Elemente (32a, 33a, 34a) radial nach außen entspricht, frei drehbar ist.

10. Radhalter (1) nach einem der vorhergehenden Ansprüche,
wobei das Kopplungselement (60) eine zentrale Seilrolle (60) umfasst, die insbesondere um eine am zentralen Bereich des Basiskörpers (10) vorgesehene zentrale Welle (A) drehbar gelagert ist;
wobei die Zugelemente (62, 63, 64), die insbesondere als Seilstränge (62, 63, 64) ausgebildet sind, mit einem ersten Ende an der zentralen Seilrolle (60) und mit einem zweiten Ende an dem jeweiligen beweglichen Element (32a, 33a, 34a) befestigt sind;
wobei die Zugelemente (62, 63, 64) auf der zentralen Seilrolle (60) aufwickelbar und von der zentralen Seilrolle (60) abwickelbar sind;
wobei die zentrale Seilrolle (60) mechanisch mit einem elastischen Triebelement (65), insbesondere einer Spiralfeder gekoppelt ist, die insbesondere mit der zentralen Welle (A) der zentralen Seilrolle (60) verbunden ist, und welche die zentrale Seilrolle (60) so vorspannt, dass über die Zugelemente (62, 63, 64) eine radial nach innen wirkende Zugkraft auf die beweglichen Elemente (32a, 33a, 34a) ausgeübt wird.

11. Radhalter (1) nach Anspruch 10,
wobei die Druckfedern (52, 53, 53) und das Triebelement (65) so ausgebildet sind, dass die nach innen gerichteten Zugkräfte der Zugelemente (62, 63, 63) größer als die radial nach außen gerichteten Druckkräfte der Druckfedern (52, 53, 54) sind, sodass die resultierende Kraft die beweglichen Elemente (32a, 33a, 34a) in radialer Richtung nach innen zieht.

12. Radhalter (1) nach Anspruch 10 oder 11,
wobei jeder der Seilstränge (62, 63, 63) in radialer Richtung jeweils durch einen Innenraum einer der Druckfedern (52, 53, 54) verläuft.

13. Radhalter (1) nach einem der Ansprüche 10 bis 12,
wobei sich die wenigstens zwei Arme (22, 23, 24) des Radhalters (1) in einer gemeinsamen Ebene erstrecken und wobei die zentrale Welle (A) orthogonal zu der gemeinsamen Ebene ausgerichtet ist.

14. Verfahren zum Montieren eines Radhalters (1) nach einem der Ansprüche 10 bis 13 auf einem Rad (9), insbesondere einem Rad (9) eines Kraftfahrzeugs, wobei das Verfahren die folgenden Schritte umfasst:
manuelles Ziehen eines der beweglichen Elemente (32a, 33a, 34a) radial nach außen unter Abwickeln des Zugelements (62, 63, 63) des beweglichen Elements von dem Kopplungselement (60), wodurch sich auch das Zugelement (62, 63, 63) des anderen beweglichen Elements (32a, 33a, 34a) bzw. die Zugelemente (62, 63, 63) der anderen beweglichen Elemente (32a, 33a, 34a) von dem Kopplungselement (60) abwickeln, so dass auch das andere bewegliche Element (32a, 33a, 34a) bzw. die anderen beweglichen Elemente (32a, 33a, 34a) durch deren Druckfeder(n) (52, 53, 54) synchron nach außen bewegt werden;
zentriertes Aufsetzen des Radhalters (1) auf das Rad (9) des Kraftfahrzeugs, insbesondere mit an den Enden der Arme (22, 23, 24) ausgebildeten Klauen (12a, 13a, 14a), auf die Radlauffläche (7); und
Loslassen des beweglichen Elements (32a, 33a, 34a), wodurch die beweglichen Elemente (32a, 33a, 34a) aufgrund des von dem Triebelement (65) ausgeübten Drehmoments nach innen gezogen werden, wodurch der Radhalter (1) an dem Rad (9) fixiert wird;
wobei das Verfahren insbesondere ein zusätzliches Spannen der beweglichen Elemente (32a, 33a, 34a) durch manuelles Betätigen eines Spannmechanismus (70) und/oder Arretieren der beweglichen Elemente (32a, 33a, 34a) durch Aktivieren eines Arretierungsmechanismus (80) umfasst.

15. Verfahren zum Abmontieren eines Radhalters (1) nach einem der Ansprüche 10 bis 13 von einem Rad (9), insbesondere einem Rad (9) eines Kraftfahrzeugs, wobei das Verfahren die folgenden Schritte umfasst:
ggf. manuelles Lösen eines zuvor aktivierten Arretierungsmechanismus (80);
manuelles Ziehen wenigstens eines beweglichen Elements (32a, 33a, 34a) radial nach außen unter Abwickeln des mit dem beweglichen Element (32a, 33a, 34a) verbundenen Zugelements (62, 63, 64) von dem Kopplungselement (60), wodurch sich auch das Zugelement (62, 63, 63) des anderen beweglichen Elements bzw. die Zugelemente (62, 63, 63) der anderen beweglichen Elemente (32a, 33a, 34a) von dem Kopplungselement (60) abwickeln, so dass auch das andere bewegliche Element (32a, 33a, 34a) bzw. die anderen beweglichen Elemente (32a, 33a, 34a) durch deren Druckelfedern(n) (52, 53, 54) synchron nach außen bewegt werden, wodurch sich die Klauen (11a, 12a, 13a) von der Radlauffläche (7) lösen;
seitliches Abnehmen des Radhalters (1) von dem Rad (9);
Loslassen oder manuelles Rückführen des beweglichen Elements (32a, 33a, 34a) in eine radial innere Position,
synchrones Rückführen des anderen beweglichen Elements (32a, 33a, 34a) des anderen Arms (22, 23, 24) bzw. der anderen beweglichen Elemente (32a, 33a, 34a) der anderen Arme (22, 23, 24) in die radial innere Position durch Ziehen der beweglichen Elemente (32a, 33a, 34a) durch das Triebelement (65), das Kopplungselement (60) und die Zugelemente (62, 63, 63) in radialer Richtung nach innen;
wobei das Verfahren insbesondere umfasst, die Bewegung der beweglichen Elemente (32a, 33a, 34a) aus den in radialer Richtung äußeren Positionen zurück nach innen durch einen Bremsmechanismus (92), insbesondere eine Rotationsbremse (94), abzubremsen.

## Claims

1. A wheel holder (1) for clamping attachment to a wheel (9), in particular to a wheel (9) of a motor vehicle, and for attaching a target (5) or sensor for vehicle wheel alignment measurement, comprising:
a base body (10) with a central portion;
at least two, in particular three, arms (22, 23, 24) extending radially outwards from the central portion of the base body (10);
each of said arms (22, 23, 24) comprising:
a movable element (32a, 33a, 34a) movable relative to the base body (10) in the radial direction in order to vary the length of the arm (22, 23, 24) in the radial direction;
a compression spring (52, 53, 54) arranged and designed to push the movable element (32a, 33a, 34a) outwards in the radial direction; and
a traction element (62, 63, 63) mechanically coupled to the movable element (32a, 33a, 34a) and arranged and designed to pull the movable element (32a, 33a, 34a) inwards in the radial direction; and
wherein the wheel holder (1) comprises a coupling element (60) that mechanically couples the traction elements (62, 63, 63) of the at least two arms (22, 23, 24) to each other.

2. The wheel holder (1) according to claim 1,
wherein each of said arms (22, 23, 24) comprises a stationary element (32a, 33a, 34a) that is fixedly connected to the base body (10) or integrally formed with the base body (10);
wherein the movable element (32a, 33a, 34a) is displaceable relative to the stationary element (32a, 33a, 34a) in the radial direction, wherein the movable element (32a, 33a, 34a) is designed in particular as a slide that is guided relative to the stationary element (32a, 33a, 34a) or at least partially enclosed by the stationary element (32a, 33a, 34a); and
wherein the movable element (32a, 33a, 34a) has at an outer end a claw (12a, 13a, 14a) for abutment against a tire tread surface (7) of the wheel (9) and/or a spacer (12b, 13b, 14b) for abutment against a tire flank of the wheel (9).

3. The wheel holder (1) according to any of the preceding claims,
wherein the compression spring (52, 53, 54) of each arm (22, 23, 24) is supported with a first end on the base body (10), in particular on a supporting surface (2, 3, 4) of the base body (10), and is supported with a second end on the movable element (32a, 33a, 34a), in particular on a radially inner end of the movable element (32a, 33a, 34a);
wherein the compression spring (52, 53, 54) of each arm (22, 23, 24) is in particular at least partially surrounded by a casing (42, 43, 44).

4. The wheel holder (1) according to any of the preceding claims,
wherein the wheel holder (1) additionally comprises a clamping mechanism (70) that is designed to apply to the movable elements (32a, 33a, 34a) an additional clamping force acting inwardly in the radial direction.

5. The wheel holder (1) according to claim 4,
wherein the clamping mechanism (70) comprises a manually operable actuating element (74), in particular a lever or a rotary knob, that is mechanically coupled to the movable elements;
wherein the actuating element (74) is arranged at a radial distance from the central pulley (60) and in particular on a front side of the wheel holder (1), and is operatively connected to the coupling element (60) by means of a force transmitting element (72), in particular by means of a belt or a chain, in particular on a rear side of the wheel holder (1), so that a torque applied manually via the actuating element (74) can be transmitted to the coupling element (60) via the force transmitting element (72), as a result of which the traction elements (62, 63, 63) apply to the movable elements (32a, 33a, 34a) additional clamping forces acting inwardly in the radial direction.

6. The wheel holder (1) according to any of the preceding claims,
wherein the wheel holder (1) additionally comprises a locking mechanism (80) configured to block the movement of the movable elements (32a, 33a, 34a) in at least one radial direction, and in particular to block the movement of the movable elements (32a, 33a, 34a) in a first radial direction and to release the same in a second radial direction opposite to the first direction;
wherein the locking mechanism (80) is switchable in particular between a first state in which the movement of the movable elements (32a, 33a, 34a) is blocked in a first radial direction and released in a second radial direction opposite to the first radial direction, and a second state in which the movement of the movable elements (32a, 33a, 34a) is released in the first radial direction and blocked in the second radial direction.

7. The wheel holder (1) according to claim 6,
wherein the locking mechanism (80) comprises at least one ratchet gear (82, 84) and at least one locking member (86) configured to engage the teeth (83, 85) of the ratchet gear (82, 84);
wherein the teeth (83, 85) of the at least one ratchet gear (82, 84) have steep and flat flanks and the locking member (86) is arranged to be pivotable into a locking position in which a pawl (87) of the locking member (86) engages between a steep and a flat flank of the teeth (83, 85) of the ratchet gear (82, 84), abutting against the steep flank and thus blocking rotation of the ratchet gear (82, 84);
wherein the at least one ratchet gear (82, 84) is arranged in particular on a shaft (A, B) of the coupling element (60) or of the actuating element (74).

8. The wheel holder (1) according to claim 7,
wherein two ratchet gears (82, 84), each with a different orientation of the steep and flat flanks, are arranged coaxially one above the other on a common shaft (B),
wherein the locking member (86) is pivotable by a switching mechanism (88, 90) between at least two positions, namely a first position in which a pawl (87) of the locking member (86) engages between a steep and a flat flank of the teeth (83, 85) of the first ratchet gear (82, 84), abutting against the steep flank and preventing rotation of the first ratchet gear (82, 84) in a first direction of rotation, and a second position in which a pawl (87) of the locking member (86) engages between a steep and a flat flank of the teeth (83, 85) of the second ratchet gear (82, 84), abutting against the steep flank and blocking rotation of the second ratchet gear (82, 84) in a second direction of rotation opposite to the first direction of rotation;
wherein the locking member (86) is pivotable in particular to a third freewheeling position, in which the locking member (86) does not engage any of the ratchet gears (82, 84), so that the locking mechanism (80) allows rotation of the shaft (B) in both directions.

9. The wheel holder (1) according to any of the preceding claims,
further comprising a braking mechanism (94) adapted to decelerate the movement of the movable elements (32a, 33a, 34a) from the extended positions in the radial direction inwardly;
wherein the braking mechanism (92) is designed in particular as a rotation brake with a brake wheel (94) moving concomitantly with the force transmitting element (72), in particular the belt or the chain, of the clamping mechanism (70);
wherein the brake wheel (94) is rotatable with resistance in a direction corresponding to the direction of movement of the movable elements (32a, 33a, 34a) radially inwards; and
wherein the brake wheel (94) is freely rotatable in particular in an opposite direction corresponding to the direction of movement of the movable elements (32a, 33a, 34a) radially outwards.

10. The wheel holder (1) according to any of the preceding claims,
wherein the coupling element (60) comprises a central pulley (60) which is rotatably mounted about a central shaft (A), in particular in the central portion of the base body (10);
wherein the traction elements (62, 63, 64), which are in particular formed as rope strands (62, 63, 64), are fixed with a first end to the central pulley (60) and with a second end to the respective movable element (32a, 33a, 34a);
wherein the traction elements (62, 63, 64) are adapted to be wound on the central pulley (60) and unwound from the central pulley (60);
wherein the central pulley (60) is mechanically coupled to an elastic drive element (65), in particular a spiral spring, which is connected in particular to the central shaft (A) of the central pulley (60) and which biases the central pulley (60) in such a way that a radially inwardly acting traction force is applied to the movable elements (32a, 33a, 34a) via the traction elements (62, 63, 64).

11. The wheel holder (1) according to claim 10,
wherein the compression springs (52, 53, 53) and the drive element (65) are designed such that the inwardly directed traction forces of the traction elements (62, 63, 63) are greater than the radially outwardly directed compressive forces of the compression springs (52, 53, 54), so that the resulting force pulls the movable elements (32a, 33a, 34a) inwards in the radial direction.

12. The wheel holder (1) according to claim 10 or 11,
wherein each of the rope strands (62, 63, 63) extends in the radial direction through a respective inner space of one of the compression springs (52, 53, 54).

13. The wheel holder (1) according to any of claims 10 to 12,
wherein the at least two arms (22, 23, 24) of the wheel holder (1) extend in a common plane and wherein the central shaft (A) is oriented orthogonally to the common plane.

14. A method of mounting a wheel holder (1) according to any of claims 10 to 13 to a wheel (9), in particular a wheel (9) of a motor vehicle, the method comprising the following steps:
manually pulling one of the movable elements (32a, 33a, 34a) radially outwards while unwinding the traction element (62, 63, 63) of the movable element from the coupling element (60), thereby also unwinding the traction element (62, 63, 63) of the other movable element (32a, 33a, 34a) or the traction elements (62, 63, 63) of the other movable elements (32a, 33a, 34a) from the coupling element (60), so that also the other movable element (32a, 33a, 34a) or the other movable elements (32a, 33a, 34a) are synchronously moved outwards by the compression spring(s) (52, 53, 54) thereof;
applying the wheel holder (1) in centered manner on the wheel (9) of the motor vehicle, in particular with claws (12a, 13a, 14a) formed at the ends of the arms (22, 23, 24), on the wheel tread surface (7); and
releasing the movable element (32a, 33a, 34a), whereby the movable elements (32a, 33a, 34a) are pulled inwards due to the torque exerted by the drive element (65), thereby fixing the wheel holder (1) to the wheel (9);
wherein the method comprises in particular additional clamping of the movable elements (32a, 33a, 34a) by manual operation of a clamping mechanism (70) and/or locking of the movable elements (32a, 33a, 34a) by activation of a locking mechanism (80).

15. A method of unmounting a wheel holder (1) according to any of claims 10 to 13 from a wheel (9), in particular a wheel (9) of a motor vehicle, the method comprising the following steps:
if necessary, manually releasing a previously activated locking mechanism (80);
manually pulling at least one movable element (32a, 33a, 34a) radially outwards while unwinding the traction element (62, 63, 64) connected to the movable element (32a, 33a, 34a) from the coupling element (60), thus unwinding also the traction element (62, 63, 63) of the other movable element or the traction elements (62, 63, 63) of the other movable elements (32a, 33a, 34a) from the coupling element (60), so that also the other movable element (32a, 33a, 34a) or the other movable elements (32a, 33a, 34a) are synchronously moved outwardly by the compression spring(s) (52, 53, 54) thereof, whereby the claws (11a, 12a, 13a) are released from the wheel tread surface (7);
laterally removing the wheel holder (1) from the wheel (9);
releasing or manually returning the movable element (32a, 33a, 34a) to a radially inner position,
synchronously returning the other movable element (32a, 33a, 34a) of the other arm (22, 23, 24) or the other movable elements (32a, 33a, 34a) of the other arms (22, 23, 24) to the radially inner position by pulling the movable elements (32a, 33a, 34a) radially inwards by the drive element (65), the coupling element (60) and the traction elements (62, 63, 63);
wherein the method in particular comprises decelerating the movement of the movable elements (32a, 33a, 34a) from the radially outer positions back inwardly by a braking mechanism (92), in particular a rotation brake (94).

## Revendications

1. Support de roue (1) pour la fixation par serrage à une roue (9), en particulier à une roue (9) de véhicule automobile, et pour la fixation d'une cible (5) ou d'un capteur en vue du contrôle de la géométrie, présentant :
un corps de base (10) avec une zone centrale ;
au moins deux, en particulier trois bras (22, 23, 24) qui s'étendent depuis la zone centrale du corps de base (10) vers l'extérieur en direction radiale ;
dans lequel chacun des bras (22, 23, 24) présente :
un élément mobile (32a, 33a, 34a), qui bouge par rapport au corps de base (10) en direction radiale, faisant ainsi varier la longueur du bras (22, 23, 24) en direction radiale ;
un ressort de compression (52, 53, 54) disposé et réalisé de manière à presser l'élément mobile (32a, 33a, 34a) vers l'extérieur en direction radiale ; et
un élément de traction (62, 63, 63) couplé mécaniquement à l'élément mobile (32a, 33a, 34a), disposé et réalisé de manière à tirer l'élément mobile (32a, 33a, 34a) vers l'intérieur en direction radiale ; et
dans lequel le support de roue (1) présente un élément de couplage (60) qui couple mécaniquement les éléments de traction (62, 63, 63) des bras (22, 23, 24), deux au moins.

2. Le support de roue (1) selon la revendication 1,
dans lequel chacun des bras (22, 23, 24) présente un élément stationnaire (32a, 33a, 34a) qui est relié de manière fixe au corps de base (10) ou réalisé d'un seul tenant avec le corps de base (10) ;
dans lequel l'élément mobile (32a, 33a, 34a) peut être déplacé en direction radiale par rapport à l'élément stationnaire (32a, 33a, 34a), l'élément mobile (32a, 33a, 34a) étant en particulier réalisé en tant que coulisseau guidé face à l'élément stationnaire (32a, 33a, 34a) ou au moins entouré partiellement par l'élément stationnaire (32a, 33a, 34a) ; et
dans lequel l'élément mobile (32a, 33a, 34a) présente à une extrémité extérieure une griffe (12a, 13a, 14a) à fixer à une bande de roulement du pneumatique (7) de la roue (9) et/ou un espaceur (12b, 13b, 14b) à fixer à un flanc du pneumatique de la roue (9).

3. Le support de roue (1) selon l'une quelconque des revendications précédentes,
dans lequel le ressort de compression (52, 53, 54) de chaque bras (22, 23, 24) est appuyé avec une première extrémité contre le corps de base (10), en particulier contre une surface d'appui (2, 3, 4) du corps de base (10), et avec une deuxième extrémité contre l'élément mobile (32a, 33a, 34a), en particulier contre une extrémité intérieure en direction radiale de l'élément mobile (32a, 33a, 34a) ;
dans lequel le ressort de compression (52, 53, 54) de chaque bras (22, 23, 24) est en particulier entouré, au moins partiellement, d'un revêtement (42, 43, 44).

4. Le support de roue (1) selon l'une quelconque des revendications précédentes,
dans lequel le support de roue (1) présente en outre un mécanisme de serrage (70) réalisé de manière à appliquer une force de serrage supplémentaire vers l'intérieur en direction radiale sur les éléments mobiles (32a, 33a, 34a).

5. Le support de roue (1) selon la revendication 4,
dans lequel le mécanisme de serrage (70) englobe un élément d'actionnement (74) couplé mécaniquement à l'élément mobile et actionnable manuellement, en particulier un levier ou un bouton rotatif ;
dans lequel l'élément d'actionnement (74) est disposé à une distance radiale de la poulie centrale (60), en particulier sur un côté avant du support de roue (1), et relié fonctionnellement à l'élément de couplage (60) au moyen d'un élément de transmission de force (72), en particulier au moyen d'une courroie ou d'une chaîne, en particulier sur un côté arrière du support de roue (1), de telle sorte qu'un couple de rotation appliqué manuellement par l'intermédiaire de l'élément d'actionnement (74) peut être transmis par l'élément de transmission de force (72) à l'élément de couplage (60), ce qui permet aux éléments de traction (62, 63, 63) d'exercer des forces de serrage supplémentaires vers l'intérieur en direction radiale sur les éléments mobiles (32a, 33a, 34a).

6. Le support de roue (1) selon l'une quelconque des revendications précédentes,
dans lequel le support de roue (1) présente en outre un mécanisme d'arrêt (80), réalisé de manière à bloquer le mouvement des éléments mobiles (32a, 33a, 34a) dans au moins une direction radiale et, en particulier, à bloquer le mouvement des éléments mobiles (32a, 33a, 34a) dans une première direction radiale et à le débloquer dans une deuxième direction radiale qui est opposée à la première direction radiale ;
dans lequel le mécanisme d'arrêt (80) peut en particulier être commuté entre un premier état où le mouvement des éléments mobiles (32a, 33a, 34a) est bloqué dans une première direction radiale et débloqué dans une deuxième direction radiale qui est opposée à la première direction radiale, et un deuxième état où le mouvement des éléments mobiles (32a, 33a, 34a) est débloqué dans la première direction radiale et bloqué dans la deuxième direction radiale.

7. Le support de roue (1) selon la revendication 6,
dans lequel le mécanisme d'arrêt (80) comprend au moins une roue dentée d'encliquetage (82, 84) et au moins un élément de blocage (86) réalisé pour s'engager dans les dents (83, 85) de la roue dentée d'encliquetage (82, 84) ;
dans lequel les dents (83, 85) de la roue dentée d'encliquetage (82, 84), une au moins, présentent des flancs raides et plats et dans lequel l'élément de blocage (86) est disposé de telle sorte qu'il peut pivoter dans une position de blocage dans laquelle un cliquet de blocage (87) de l'élément de blocage (86) s'engage entre un flanc raide et un flanc plat des dents (83, 85) de la roue dentée d'encliquetage (82, 84), venant buter contre le flanc raide et bloquant ainsi une rotation de la roue dentée d'encliquetage (82, 84) ;
dans lequel la roue dentée d'encliquetage (82, 84), une au moins, est disposée en particulier sur un arbre (A, B) de l'élément de couplage (60) ou de l'élément d'actionnement (74).

8. Le support de roue (1) selon la revendication 7,
dans lequel deux roues dentées d'encliquetage (82, 84) ayant des flancs raides et plats orientés différemment sont disposées l'une sur l'autre coaxialement sur un arbre (B) commun,
dans lequel l'élément de blocage (86) peut pivoter, grâce à un mécanisme de commutation (88, 90), entre au moins deux positions, à savoir une première position où un cliquet de blocage (87) de l'élément de blocage (86) s'engage entre un flanc raide et un flanc plat des dents (83, 85) de la première roue dentée d'encliquetage (82, 84), venant buter contre le flanc raide et bloquant ainsi une rotation de la première roue dentée d'encliquetage (82, 84) dans une première direction de rotation, et une deuxième position où un cliquet de blocage (87) de l'élément de blocage (86) s'engage entre un flanc raide et un flanc plat des dents (83, 85) de la deuxième roue dentée d'encliquetage (82, 84), venant buter contre le flanc raide et bloquant ainsi une rotation de la deuxième roue dentée d'encliquetage (82, 84) dans une deuxième direction de rotation, qui est opposée à la première direction de rotation ;
dans lequel l'élément de blocage (86) peut en particulier pivoter dans une troisième position de déblocage, où l'élément de blocage (86) ne s'engage dans aucune des roues dentées d'encliquetage (82, 84), de sorte que le mécanisme d'arrêt (80) permet des rotations de l'arbre (B) dans les deux directions.

9. Le support de roue (1) selon l'une quelconque des revendications précédentes,
présentant également un mécanisme de freinage (94) réalisé de manière à freiner le mouvement des éléments mobiles (32a, 33a, 34a) depuis les positions étendues vers l'intérieur en direction radiale ;
dans lequel le mécanisme de freinage (92) est réalisé en particulier sous la forme d'un frein rotatif avec une roue de freinage (94) tournant avec l'élément de transmission de force (72), en particulier la courroie ou la chaîne, du mécanisme de serrage (70) ;
dans lequel la roue de freinage (94) peut tourner avec résistance dans une direction correspondant à la direction de mouvement des éléments mobiles (32a, 33a, 34a) radialement vers l'intérieur ; et
dans lequel la roue de freinage (94) peut en particulier tourner librement dans une direction opposée, correspondant à la direction de mouvement des éléments mobiles (32a, 33a, 34a) radialement vers l'extérieur.

10. Le support de roue (1) selon l'une quelconque des revendications précédentes,
dans lequel l'élément de couplage (60) englobe une poulie centrale (60) qui est, en particulier, montée de manière à pouvoir tourner autour d'un arbre central (A) prévu dans la zone centrale du corps de base (10) ;
dans lequel les éléments de traction (62, 63, 64), qui sont réalisés en particulier sous la forme de brins de câble (62, 63, 64), sont fixés avec une première extrémité à la poulie centrale (60) et avec une deuxième extrémité à l'élément mobile correspondant (32a, 33a, 34a) ;
dans lequel les éléments de traction (62, 63, 64) peuvent être enroulés sur la poulie centrale (60) ou déroulés de la poulie centrale (60) ;
dans lequel la poulie centrale (60) est couplée mécaniquement à un élément d'entraînement élastique (65), en particulier un ressort hélicoïdal, qui est en particulier relié à l'arbre central (A) de la poulie centrale (60), et qui précontraint la poulie centrale (60) de telle sorte qu'une force de traction est exercée radialement vers l'intérieur sur les éléments mobiles (32a, 33a, 34a) par l'intermédiaire des éléments de traction (62, 63, 64).

11. Le support de roue (1) selon la revendication 10,
dans lequel les ressorts de compression (52, 53, 53) et l'élément d'entraînement (65) sont réalisés de manière à ce que les forces de traction vers l'intérieur des éléments de traction (62, 63, 63) soient supérieures aux forces de compression agissant radialement vers l'extérieur des ressorts de compression (52, 53, 54), de telle sorte que la force qui en résulte tire les éléments mobiles (32a, 33a, 34a) vers l'intérieur en direction radiale.

12. Le support de roue (1) selon la revendication 10 ou 11,
dans lequel chacun des brins de câble (62, 63, 63) passe en direction radiale à travers un espace intérieur de l'un des ressorts de compression (52, 53, 54).

13. Le support de roue (1) selon l'une quelconque des revendications 10 à 12,
dans lequel les deux bras au moins (22, 23, 24) du support de roue (1) s'étendent sur un plan commun et l'arbre central (A) est orienté orthogonalement par rapport au plan commun.

14. Procédé de montage d'un support de roue (1) selon l'une quelconque des revendications 10 à 13 sur une roue (9), en particulier sur une roue (9) d'un véhicule automobile, le procédé comprenant les étapes suivantes :
traction manuelle de l'un des éléments mobiles (32a, 33a, 34a) radialement vers l'extérieur en déroulant l'élément de traction (62, 63, 63) de l'élément mobile de l'élément de couplage (60), ce qui fait que l'élément de traction (62, 63, 63) de l'autre élément mobile (32a, 33a, 34a) ou les éléments de traction (62, 63, 63) des autres éléments mobiles (32a, 33a, 34a) se déroulent également de l'élément de couplage (60), de sorte que l'autre élément mobile (32a, 33a, 34a) ou les autres éléments mobiles (32a, 33a, 34a) sont également déplacés vers l'extérieur de manière synchronisée par son/leur ressort de compression (52, 53, 54) ;
mise en place centrée du support de roue (1) sur la roue (9) du véhicule automobile, en particulier avec des griffes (12a, 13a, 14a) formées aux extrémités des bras (22, 23, 24), sur la bande de roulement de la roue (7) ; et
relâchement de l'élément mobile (32a, 33a, 34a), de sorte que les éléments mobiles (32a, 33a, 34a) sont tirés vers l'intérieur en raison du couple exercé par l'élément d'entraînement (65), fixant ainsi le support de roue (1) à la roue (9) ;
le procédé comprenant en particulier un serrage supplémentaire des éléments mobiles (32a, 33a, 34a) en actionnant manuellement un mécanisme de serrage (70) et/ou un blocage des éléments mobiles (32a, 33a, 34a) en activant un mécanisme d'arrêt (80).

15. Procédé de démontage d'un support de roue (1) selon l'une quelconque des revendications 10 à 13 d'une roue (9), en particulier d'une roue (9) d'un véhicule automobile, le procédé comprenant les étapes suivantes :
le cas échéant, déblocage manuel d'un mécanisme d'arrêt (80) activé précédemment ;
traction manuelle d'au moins un élément mobile (32a, 33a, 34a) radialement vers l'extérieur en déroulant l'élément de traction (62, 63, 64) relié à l'élément mobile (32a, 33a, 34a) de l'élément de couplage (60), ce qui fait que l'élément de traction (62, 63, 63) de l'autre élément mobile ou les éléments de traction (62, 63, 63) des autres éléments mobiles (32a, 33a, 34a) se déroulent également de l'élément de couplage (60), de sorte que l'autre élément mobile (32a, 33a, 34a) ou les autres éléments mobiles (32a, 33a, 34a) sont déplacés vers l'extérieur de manière synchronisée par son/leur ressort de compression (52, 53, 54), détachant ainsi les griffes (1 1a, 12a, 13a) de la bande de roulement de la roue (7) ;
retrait latéral du support de roue (1) de la roue (9) ;
relâchement ou remise en position manuelle de l'élément mobile (32a, 33a, 34a) dans une position radiale intérieure,
remise en place manuelle synchronisée de l'autre élément mobile (32a, 33a, 34a) de l'autre bras (22, 23, 24) ou des autres éléments mobiles (32a, 33a, 34a) des autres bras (22, 23, 24) dans la position intérieure radiale en tirant les éléments mobiles (32a, 33a, 34a) par l'élément d'entraînement (65), l'élément de couplage (60) et les éléments de traction (62, 63, 63) en direction radiale vers l'intérieur ;
le procédé comprenant en particulier le freinage du mouvement retour des éléments mobiles (32a, 33a, 34a) des positions extérieures en direction radiale vers l'intérieur par un mécanisme de freinage (92), en particulier par un frein rotatif (94).
